# EUROPEAN PATENT APPLICATION

(11) **EP 4 455 468 A1**
(43) Date of publication of application: **30.10.2024**
(21) Application number: 24165790.7
(22) Date of filing: 25.03.2024
(51) Int. Cl.: F02C 7/224, F02C 3/22

(54) **CRYOGENIC FUELLED AIRCRAFT PROPULSION SYSTEM**

(30) Priority: 24.04.2023 GB 202305960
(71) Applicant: Rolls-Royce plc, London N1 9FX (GB)
(72) Inventor: Palmer, Chloe, Derby, DE24 8BJ (GB); Willshee, Matthew, Derby, DE24 8BJ (GB)
(74) Representative: Rolls-Royce plc

(57) **Abstract**

A cryogenic fuelled aircraft propulsion system comprises a gas turbine engine (103) mounted to a wing (105) by an engine pylon (310), and configured to receive cryogenic fuel, the gas turbine engine comprising a core compressor (202, 204). The propulsion system further comprises a pre-heater (218) configured to heat the fuel prior to delivery to the gas turbine engine. The pre-heater (218) is located within the engine pylon (310), aft of the engine core compressor (202, 204).

## Description

### TECHNICAL FIELD

This disclosure relates to cryogenic fuelled aircraft propulsion systems.

### BACKGROUND

In order to limit emissions of carbon dioxide, use of hydrogen stored as a cryogenically cooled gas or liquid as an alternative to hydrocarbon fuel in aircraft gas turbine engines has been proposed. Similarly, cryogenically stored liquid ammonia or methane (either natural gas or synthetically derived) have also been proposed as alternative fuels. Such cryogenically stored fuels however must be heated prior to combustion. Doing so in a manner which is efficient from an overall propulsion system perspective is a significant challenge.

### SUMMARY

In a first aspect there is provided a cryogenic fuelled aircraft propulsion system comprising:
a gas turbine engine mounted to a wing by an engine pylon, and configured to receive cryogenic fuel, the gas turbine engine comprising a core compressor;
a pre-heater configured to heat the fuel prior to delivery to the gas turbine engine; wherein
the pre-heater is located within the engine pylon, aft of the engine core compressor.

In view of the low temperature of fuel prior to entering the engine, it is thought that external icing may be a risk in the fuel system. By providing the pre-heater in the engine pylon, aft of the core compressor, heat from the combustor and turbine sections may mitigate external icing. Additionally, any external icing that does occur will be shed downstream of sensitive engine components, and does not result in significant performance impact on the engine or airframe. Additional advantages of the invention may also be realised.

The engine pylon may comprise an upper bifurcation fairing extending generally vertically from the wing to a core nacelle of the gas turbine engine. The pre-heater may be located within the upper bifurcation fairing. Advantageously, an existing engine component is used for location of the pre-heater, thereby reducing drag that would be associated from additional housings.

The pre-heater may comprise a burner configured to burn a portion of the fuel prior to delivery to the gas turbine engine.

The pre-heater may comprise a pre-heater heat exchanger configured to exchange heat between pre-heater combustion gases and fuel prior to delivery to the gas turbine engine.

The pre-heater heat exchanger may be located within the engine pylon. Advantageously, the relatively bulky heat exchanger can be accommodated within an existing fairing, which would otherwise result in additional drag.

The pre-heater may comprise an exhaust configured to expel combustion exhaust gases, the exhaust being directed rearwardly and located adjacent a trailing edge of the pylon. Advantageously, additional thrust is generated by the pre-heater, and drag may also be reduced by the so-called "wake-filling" effect of the exhaust flow.

The pre-heater may comprise an air supply conduit configured to provide compressed air for the pre-heater. The air supply conduit may extend through the engine pylon, and may extend between a bleed of the engine core compressor and the pre-heater. The burner may be configured to combust compressed air from the air supply conduit with fuel.

The aircraft propulsion system may comprise a fuel conduit configured to supply fuel to the gas turbine engine, and optionally, the pre-heater.

The fuel conduit may be at least partly located within the engine pylon.

The fuel conduit may extend through a tail bearing strut extending across a core gas path aft of a turbine of the gas turbine engine. Advantageously, additional heat exchange is provided between core gas flow and fuel, thereby further improving overall system efficiency.

The propulsion system may comprise a recuperator comprising a heat exchanger configured to exchange heat between exhaust gases from the gas turbine engine and fuel prior to delivery to the gas turbine engine.

The recuperator heat exchanger may be located within an engine core plug nozzle, configured to receive turbine exhaust flow.

The fuel conduit may comprise an inner conduit configured to flow fuel to the recuperator heat exchanger, and an outer conduit surrounding the inner conduit configured to insulate fuel in the inner anulus. The outer conduit may be configured to provide fuel heated by the recuperator heat exchanger to a combustor of the gas turbine engine. Advantageously, large temperature differentials between the low-temperature fuel in the fuel flowing to the heat exchanger and the core exhaust gases are avoided, thereby preventing icing, and excessive thermal cycling.

Alternatively, the fuel conduit may comprise an inlet conduit extending through a first tail bearing strut and configured to supply fuel to the recuperator, and an outlet conduit extending through a second tail bearing strut and configured to supply heated fuel to a gas turbine engine com bustor.

The fuel may comprise one of hydrogen, methane and ammonia.

According to a second aspect there is provided an aircraft comprising a propulsion system in accordance with the first aspect.

### BRIEF DESCRIPTION OF THE DRAWINGS

Embodiments will now be described by way of example only with reference to the accompanying drawings, which are purely schematic and not to scale, and in which:
Figure 1 shows a cryogenic-fuelled airliner comprising cryogenic-fuelled turbofan engines;
Figure 2 is a functional block diagram showing one of the engines of figure 1
Figure 3 is a cross-sectional view from the side of the engine of Figure 2;
Figure 4 is a front view of a rear portion of the engine of figure 2;
Figure 5 is a rear quarter view of part of the engine of figure 2; and
Figure 6 is a rear quarter view of part of an alternative engine.

### DETAILED DESCRIPTION

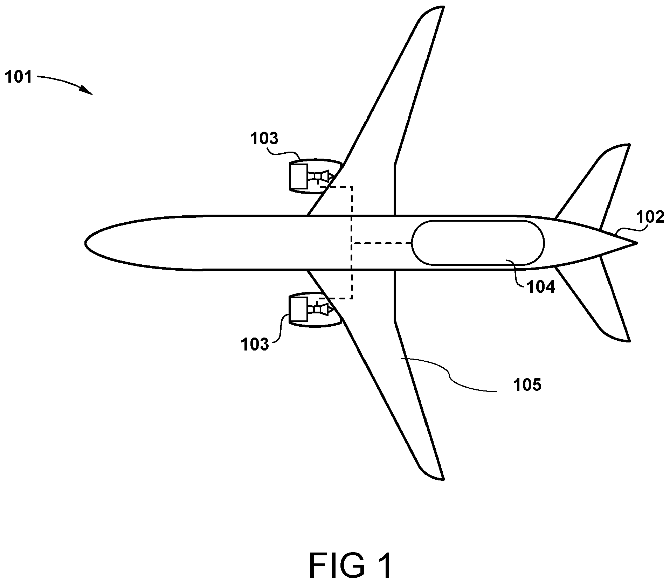

A hydrogen-fuelled airliner is illustrated in Figure 1. In this example, the airliner 101 is of substantially conventional tube-and-wing twinjet configuration with a central fuselage 102 and substantially identical turbofan engines 103 mounted underneath respective wings 105.

A cryogenic fuel storage tank 104 is located in the fuselage 102. In the present embodiment, the cryogenic fuel storage tank 104 is a hydrogen storage tank and thus stores the hydrogen fuel in a liquid, cooled compressed gaseous, or supercritical state. In other embodiments, the cryogenic fuel storage tank may be configured to store a different cryogenic fuel, such as methane or ammonia. As will be understood, the term "cryogenic" refers to substances that are stored at below ambient temperatures, and that are normally gaseous at room temperature and pressures.

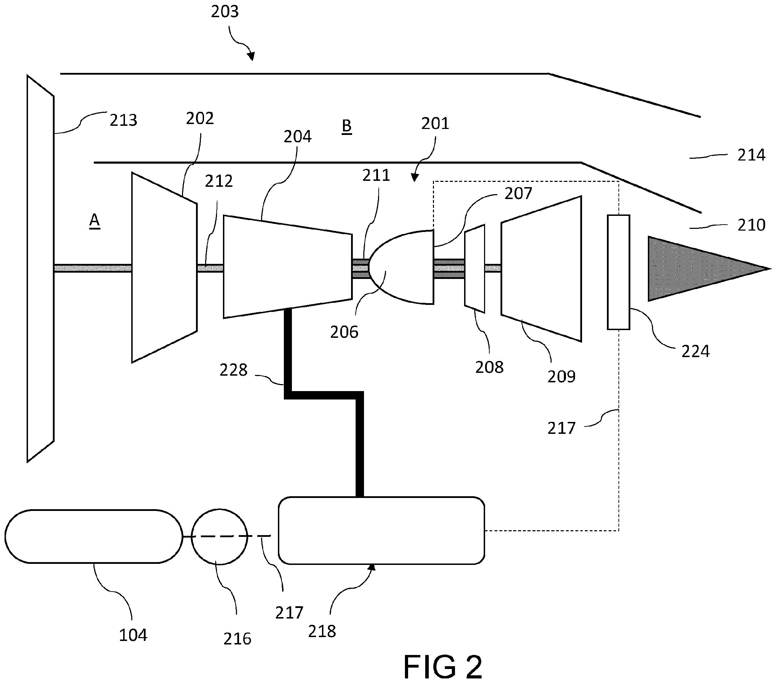

A block diagram of one of the turbofan engines 103 is shown in Figure 2.

The turbofan engine 103 comprises a core gas turbine 201.

The core gas turbine 201 comprises, in fluid flow series, a low-pressure compressor 202, a high-pressure compressor 204, a combustor 206, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212. It will be appreciated that in alternative embodiments, the core gas turbine could be of three-shaft configuration, and / or could comprise a reduction gearbox. The second shaft 212 also drives a fan 213. The fan provides a core airflow A to the gas turbine engine core, and a bypass airflow B, which bypasses the core, and provides thrust via a bypass nozzle 214.

In operation, cryogenic hydrogen fuel is pumped from the hydrogen storage tank 104 by a pump 216 and into a main fuel conduit 217 which ultimately delivers fuel to the combustor 206 via a recuperator 224. In the present embodiment, the pump 216 is high-speed centrifugal pump.

As will be appreciated, it is desirable to increase the temperature of the fuel from the cryogenic storage condition to a temperature much closer to the firing temperature of the core gas turbine 201; of course, this is subject to the constraint of not exceeding the autoignition temperature of the hydrogen fuel prior to admission into the combustor 207.

In the present embodiment, a pre-heater 218 is therefore provided for heating of the hydrogen fuel to increase the temperature and / or induce a phase change. In the present embodiment, this takes place between the pump 216 and the combustor 206. In an embodiment, the preheater 218 is configured to raise the temperature of the hydrogen fuel to the required injection temperature.

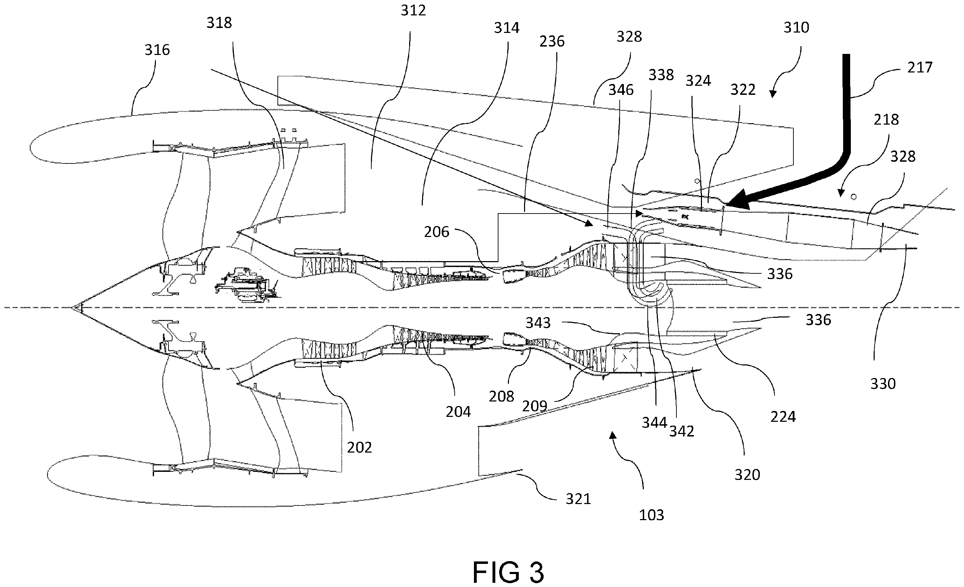

In another embodiment, the pre-heater 218 is configured to raise the temperature of the hydrogen fuel to an intermediate temperature less than the injection temperature. Further heating may subsequently be achieved by additional heating means as will be described further with reference to Figure 3.

Figure 3 illustrates the approximate sizing and positioning of the components of the propulsion system.

The engine 103 comprises a core nacelle 314 which houses core components including the compressors 202, 204, combustor 206 and turbines 208, 209. Spaced annularly outward of the core nacelle 314 is a fan nacelle 316, which surrounds the fan 213 and defines a bypass duct extending between the nacelles 314, 316 through which bypass flow B passes in use.

The gas turbine engine is installed on the wing via an engine pylon, generally indicated at 310. The engine pylon 310 is configured to mount the engine 103 to the wing 105 to provide both structural support, and to provide an interface for fluids and control lines running to and from the engine 103.

The engine pylon 310 is arranged to fasten the engine to aircraft structure. The pylon 310 comprises an external pylon fairing 311, which extends from a lower surface of the wing 105 to an outer surface of the bypass nacelle 316. The pylon further comprises a bifurcation fairing 312, which extends in a generally vertical direction from the external pylon 311 through the bypass duct between the core and fan nacelles 314, 316 and into the core where is meets a core mounting location. As such, the bifurcation fairing provides the route through which support structure for the engine is provided. The bifurcation fairing 312 has a height defined by the distance between the core and fan nacelles 314, 316, a length in the longitudinal direction of the aircraft, and a width normal to the height and length. The bifurcation fairing 312 has a length which extends from a leading edge spaced rearward of the fan 213, and optionally, rearward of any fan stator vanes 318, to a trailing edge (also known as a "boat tail fairing") rearward of the compressors 202, 205, and generally rearward of the combustor 206 and turbines 208, 209, and in some cases rearward of a core nacelle trailing edge 320 and fan nacelle trailing edge 321. As such, the bifurcation fairing 312 defines a relatively large space, particularly where the engine has a large bypass ratio and a long core.

The pre-heater 218 comprises a combustor 324 which is fed hydrogen fuel from an offtake 322, which diverts a portion of the hydrogen fuel from the main fuel conduit 217. The pre-heater 218 is also fed with air such as high-pressure air from one of the compressors 202, 205 via an air supply conduit comprising a bleed-air line 236. As such, the pre-heater 218 burns a portion of the hydrogen fuel to generate heat. This heat is transferred to the remainder of the hydrogen fuel in a heat exchanger 328, which is typically provided surrounding an exhaust of the preheater 218. Spent exhaust from the pre-heater 218 is directed through an exhaust nozzle 330 to ambient air. The exhaust nozzle 330 is located adjacent, and in this embodiment, rearward, of the trailing edge of the bifurcation fairing 312. As such, additional thrust may be generated by the pre-heater exhaust, which is directed into the bypass and / or core flow. In view of the placement of the preheater 218 such that the bypass flow surrounds the pre-heater exhaust flow, noise generated by the pre-heater exhaust flow may be minimised.

The pre-heater 218 is positioned within the engine pylon 310, and in this embodiment is positioned within the bifurcation fairing 312. The pre-heater is positioned rearward of the compressors 202, 204, and in this embodiment, is positioned rearward of the combustor 206 and turbines 208, 209 within the boat tail section of the bifurcation fairing 312, in a region of the bifurcation fairing subjected to hot gas flows from the core exhaust from the turbines 208, 209. In particular, the fuel lines 322 and the heat exchanger 328 of the preheater 218 are provided within this zone. As such, the pre-heater 218, and the fuel therein, is provided within a location which is subjected to high external temperatures, with the bifurcation fairing acting as a heat exchanger. This reduces the possibility of ice accumulating on external surfaces of the pre-heater due to thermal contact with low temperature fuel, which may otherwise be an issue during periods of non-operation of the pre-heater. Additionally, further gas turbine engine exhaust heat is utilised to heat the hydrogen prior to combustion, thereby further increasing cycle efficiency. Finally, since the preheater is located adjacent a trailing edge of the core and / or fan nacelle, any ice that does accumulate will not be shed on sensitive aircraft components.

As briefly mentioned above with reference to figure 2, the engine 103 optionally comprises a recuperator heat exchanger 224, which is installed in an engine core tail cone / core plug nozzle 336. The recuperator 224 is configured to receive fuel from the main fuel conduit 217, which may have either passed through the pre-heater 218, or may have bypassed the pre-heater, depending on operating conditions. The recuperator 224 comprises a plurality of first channels through which exhaust gases from the gas turbine engine pass, and a plurality of second channels through which hydrogen fuel passes. As such, hydrogen fuel is heated by waste gases from the gas turbine engine exhaust. Heated hydrogen is then fed to the combustor 206

Before being provided to the combustor 206 however, hydrogen fuel is first provided to the recuperator 224 via an inlet conduit 338, which extends through a first tail bearing strut 340. The tail bearing strut 340 extends between the engine core nacelle 314 and an engine core inner housing 343, across the core gas path, downstream of the turbine 208, 209. As such, this location is subject to impingement by a hot gas stream from the engine core. Consequently, further heat exchange takes place between the fuel within the inlet conduit 338, and gas turbine engine core flow.

Hydrogen within the inlet conduit 338 may however still be at a relatively low temperature, particularly where the preheater 218 is inactive. As such, the inlet conduit 338 may comprise inner 342 and outer 344 walls to at least partly insulate the hydrogen within the conduit 338, to prevent excessive thermal stresses.

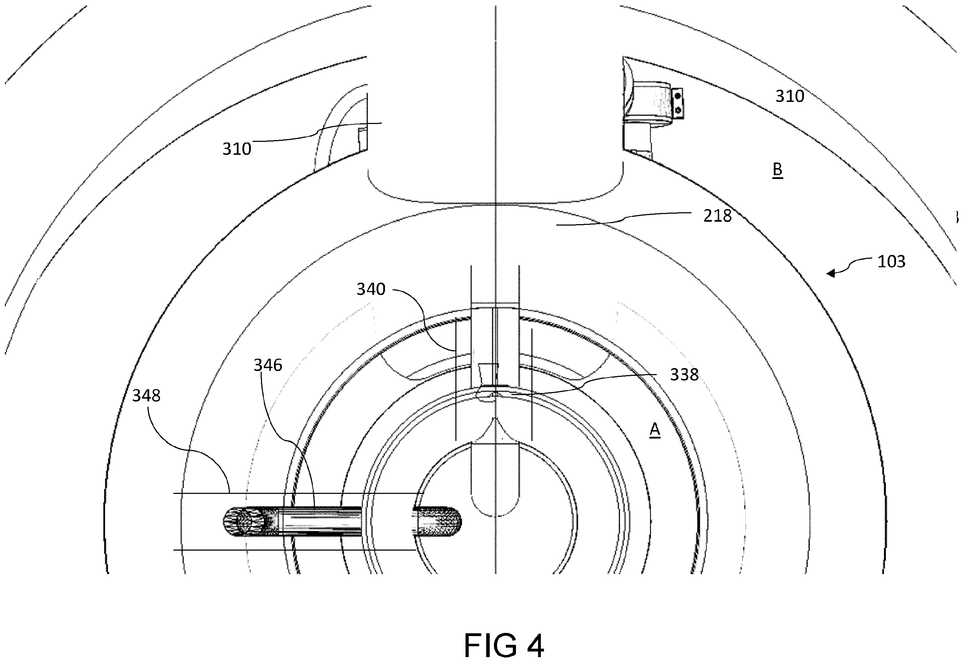

Hydrogen heated by the recuperator is passed to the combustor 206 via an outlet conduit 346. The outlet conduit 346 passes through a second tail bearing strut 348, which is provided at a different azimuthal position than the first tail bearing strut 340, as shown in figure 4. As such, the relatively large diameter conduits necessary to carry the heated hydrogen can be accommodated without significantly affecting aerolines within the engine core.

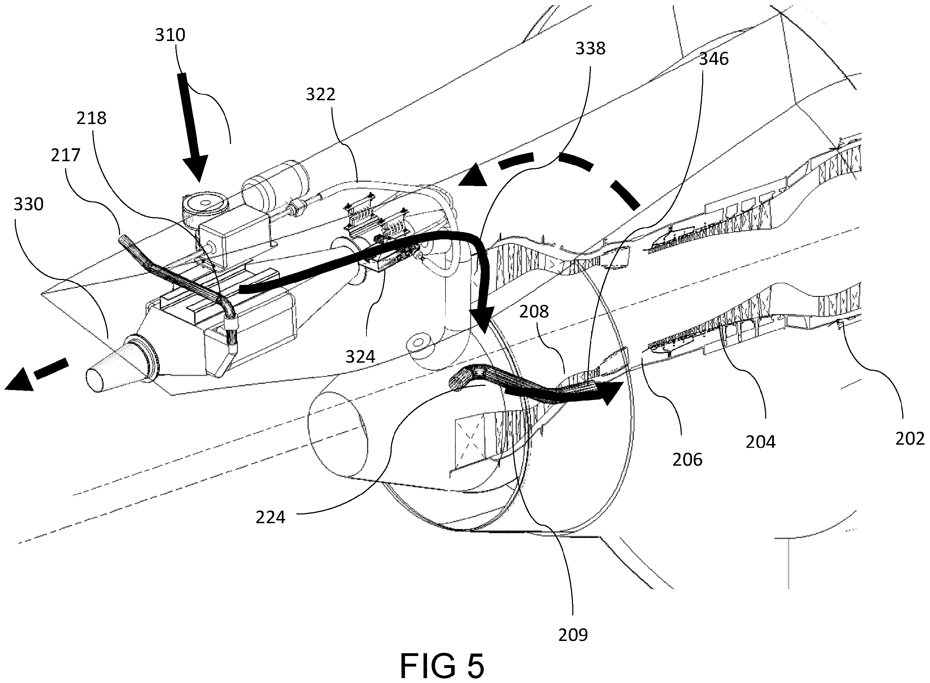

As such, and as shown in figure 5, fuel (as shown by the solid lines) flows from the tank to the preheater 218, then to the recuperator 224 through the conduits 217, 338, 346, and then to the combustor 206. Air (as shown by the dashed lines) flows from the compressor 204, 205 to the preheater 218, and out the preheater exhaust 330.

In an alternative embodiment (not shown), hydrogen may be passed to the recuperator and from the recuperator to the combustor through the same tail bearing strut. For example, a dual-walled conduit may be provided, having an inner conduit configured to provide hydrogen fuel to the recuperator, and an outer conduit shielding the inner conduit, configured to provide heated hydrogen fuel from the recuperator to the combustor. As such, additional heat exchange takes place between the heated hydrogen from the recuperator and the hydrogen going to the recuperator, thereby reducing the thermal gradient within the recuperator itself.

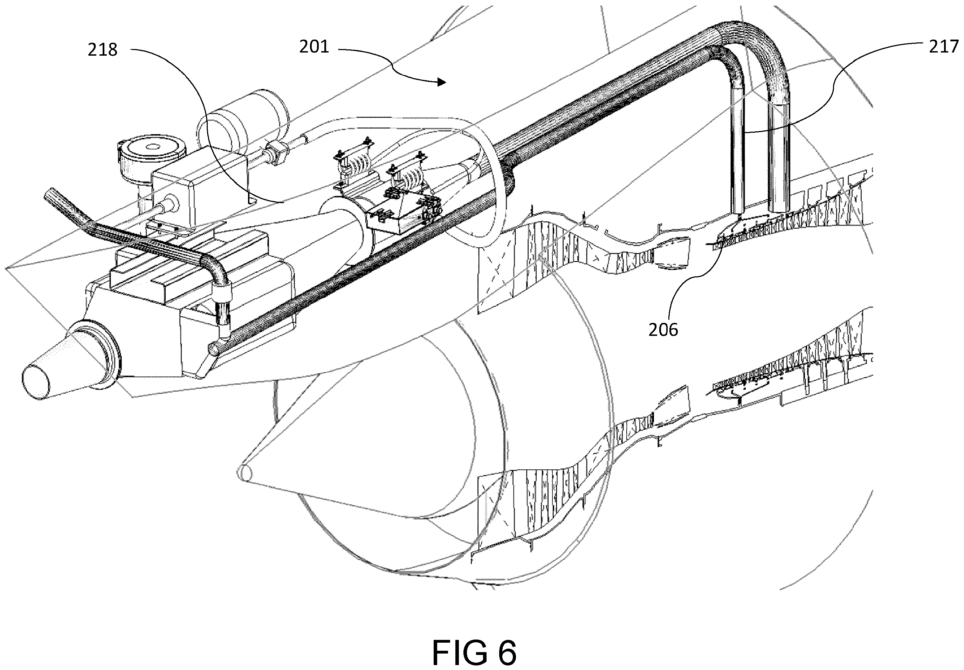

Figure 6 illustrates an alternative embodiment of the engine core 201, in which the recuperator is omitted. As can be seen, the preheater 218 and engine 201 are generally similar, but the routing of fuel differs. In the embodiment shown in figure 6, fuel is fed directly from the preheater 218 to the combustor 206 via the fuel conduit 217, without passing through a recuperator. In such an arrangement, the pre-heater 218 is responsible for raising the temperature of the fuel to the full combustor injection temperature requirement.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

Modifications could be made to the disclosed embodiment. For example, the fuel could comprise ammonia, methane, or any other cryogenically stored fuel.

The preheater could take a different form, and could for example comprise electric heating means in place or in addition to the burner. Similarly, the preheater could employ hot compressor bleed air alone in the heat exchanger, rather than combusting the compressor bleed air with fuel. In a still further example, the pre-heater could comprise an electric heater.

## Claims

1. A cryogenic fuelled aircraft propulsion system comprising:
a gas turbine engine (103) mounted to a wing (105) by an engine pylon (310), and configured to receive cryogenic fuel, the gas turbine engine comprising a core compressor (202, 204);
a pre-heater (218) configured to heat the fuel prior to delivery to the gas turbine engine; wherein
the pre-heater (218) is located within the engine pylon (310), aft of the engine core compressor (202, 204).

2. A propulsion system according to claim 1, wherein the engine pylon (310) comprises an upper bifurcation fairing (312) extending generally vertically from the wing (105) to a core nacelle (314) of the gas turbine engine, and the pre-heater (218) is located within the upper bifurcation fairing (312).

3. A propulsion system according to any of the preceding claims, wherein the pre-heater (218) comprises a burner configured to burn a portion of the fuel prior to delivery to the gas turbine engine (103).

4. A propulsion system according to claim 3, wherein the pre-heater (218) comprises a pre-heater heat exchanger (328) configured to exchange heat between pre-heater combustion gases and fuel prior to delivery to the gas turbine engine (103), wherein the pre-heater heat exchanger (328) may be located within the engine pylon (310).

5. A propulsion system according to claim 3 or claim 4, wherein the pre-heater (218) comprises an exhaust (330) configured to expel combustion exhaust gases, the exhaust (330) being directed rearwardly and located adjacent a trailing edge of the pylon (310).

6. A propulsion system according to any of the preceding claims, wherein the pre-heater (218) comprises an air supply conduit (236) configured to provide compressed air for the pre-heater (218).

7. A propulsion system according to any of the preceding claims, wherein the aircraft propulsion system comprises a fuel conduit (217) configured to supply fuel to the gas turbine engine (103), and optionally, the pre-heater (218), wherein the fuel conduit (217) is at least partly located within the engine pylon (310).

8. A propulsion system according to claim 7, wherein the fuel conduit (217) extends through a tail bearing strut (340) extending across a core gas path aft of a turbine (208, 209) of the gas turbine engine (103).

9. A propulsion system according to any of the preceding claims, comprising a recuperator (224) configured to exchange heat between exhaust gases from the gas turbine engine and fuel prior to delivery to the gas turbine engine (103).

10. A propulsion system according to claim 9, wherein the recuperator (224) is located within an engine core plug nozzle (336), configured to receive turbine exhaust flow.

11. A propulsion system according to claim 10 when dependent on claim 9, wherein the fuel conduit (217) comprises an inner conduit (342) configured to flow fuel to the recuperator heat exchanger, and an outer conduit surrounding the inner conduit configured to insulate fuel in the inner anulus.

12. A propulsion system according to claim 11, wherein the outer conduit is configured to provide fuel heated by the recuperator heat exchanger to a combustor (206) of the gas turbine engine (103).

13. A propulsion system according to claim 11, wherein the fuel conduit (217) comprises an inlet conduit (338) extending through a first tail bearing strut (340) and configured to supply fuel to the recuperator (224), and an outlet conduit (346) extending through a second tail bearing strut (348) and configured to supply heated fuel to a gas turbine engine combustor (206).

14. A propulsion system according to any of the preceding claims, wherein the fuel comprises one of hydrogen, methane and ammonia.

15. An aircraft comprising a propulsion system according to any of the preceding claims.
